# EUROPEAN PATENT APPLICATION

(11) **EP 1 182 589 A2**
(43) Date of publication of application: **27.02.2002**
(21) Application number: 01306794.7
(22) Date of filing: 09.08.2001
(51) Int. Cl.: G06F 17/30

(54) **Provision of electronic documents from cached portions**

(30) Priority: 17.08.2000 US 640529
(71) Applicant: International Business Machines Corporation, Armonk, NY 10504 (US)
(72) Inventor: Colson, James C., c/o IBM United Kingdom Ltd,, Winchester, Hampshire SO21 2JN (GB); Hild, Stefan Georg, c/o IBM United Kingdom Ltd,, Winchester, Hampshire SO21 2JN (GB)
(74) Representative: Moss, Robert Douglas

(57) **Abstract**

Dynamic and static portions within an electronic document are identified with special tags. Static portions are less frequently updated from the original server than dynamic portions. Static and dynamic portions are cached to a storage area. In one embodiment, both static and dynamic areas are cached to nonvolatile storage. In another embodiment, the static portion is cached to a nonvolatile storage location while the dynamic portion is cached to random access memory. Portions of the document are thus updateable without needing to retrieve the entire electronic document. When the user requests an electronic document, the cache is checked for both static and dynamic portions. Non-stale portions are retrieved from the cache while stale portions are retrieved from the original server.

## Description

### TECHNICAL FIELD OF THE INVENTION

The present invention relates in general to a method and system for caching document information. More particularly, the present invention relates to an improved method and system for caching dynamic and static portions of documents provided to users over a network.

### BACKGROUND OF THE INVENTION

Computer systems have attained widespread use for providing computer power to many segments of today's modern society. Systems with microprocessors are finding themselves in an array of smaller and more specialized objects that previously were largely untouched by computer technology. These devices are sometimes called "pervasive computing systems" because of their appearance as both traditionally computerized devices, such as desktop computers, tower computers, and portable computers, as well as newly computerized devices such as telephones, appliances, automobiles, and other devices. Pervasive computing devices often include a system processor and associated volatile and non-volatile memory, a display area, input means, and often interfaces, such as a network interface or modem, to other computing devices.

One of the distinguishing characteristics of these systems is the use of a system board to electrically connect these components together. These pervasive computing devices are information handling systems which are designed primarily to give independent computing power to a single user, or a group of users in the case of networked pervasive computing devices. Pervasive computing devices are often inexpensively priced for purchase by individuals or businesses. A pervasive computing device may also include one or more I/O devices (i.e. peripheral devices) which are coupled to the system processor and which perform specialized functions. Examples of I/O devices include modems, sound and video devices or specialized communication devices. Nonvolatile storage devices such as hard disks, CD-ROM drives and magneto-optical drives are also considered to be peripheral devices. Pervasive computing devices are often linked to computing systems and other pervasive computing devices using a network, such as a local area network (LAN), wide area network (WAN), or other type of network such as the Internet. By linking to computers including pervasive computing devices, a pervasive computing device can use resources owned by another computing device. These resources can include files stored on nonvolatile storage devices and resources such as printers.

Servers provide information to client computers, such as pervasive computing devices, that link to the servers through the network. Client computers that receive documents from servers often store the documents in a cache. The cache is typically stored on nonvolatile storage attached to the client computer system. A Web cache sits between Web servers (or *origin servers)* and a client or many clients, and watches requests for HTML pages, images and files (collectively known as *objects)* come by, saving a copy in the cache. Then, if there is another request for the same object, it will use the copy that it has, instead of asking the origin server for it again.

There are two main reasons that Web caches are used: First, to reduce latency - because the request is satisfied from the cache (which is closer to the client) instead of the origin, or web, server, it takes less time for the client to get the object and display it. This makes Web sites seem more responsive. The second reason web caches are used is to reduce traffic - because each object is only gotten from the server once, it reduces the amount of bandwidth used by a client. This saves money if the client is paying by traffic, and keeps their bandwidth requirements lower and more manageable.

There are two basic types of web caches - browser caches that operate with a client computer's Internet browser and proxy caches that cache information at a proxy server, rather than at a client computer. Browser caches are provided by many popular Internet browsers including Netscape Navigator™ and Microsoft Internet Explorer™. These browsers include preferences that allow users to adjust the cache settings of the browser. This allows a user to reserve a portion of the client computer's nonvolatile storage device to store documents that have been transferred from a web server to the client computer. Because this cache is stored on the client computer's nonvolatile storage device, the cache contents are available to the user of the particular client computer. The browser cache checks to make sure that cached documents are "fresh" by determining the amount of time individual documents have been in the cache. Old documents are deemed stale and are removed from the browser cache while newer documents are retained allowing the browser to fetch the documents from the browser cache rather than from the origin server. The browser cache is usually useful when the user of a client computer selects the "back" button in the browser to go back to a web page they have already seen.

Proxy caches work on the same principle as browser caches, but a much larger scale. Proxy servers serve hundreds or thousands of users in the same way; large corporations and ISP's (Internet Service Providers) often set them up on their firewalls. Because proxy caches usually have a large number of users, they are very good at reducing latency and traffic. Latency and traffic are reduced because popular objects are requested only once, and served to a large number of clients. Most proxy caches are deployed by large companies or ISPs that want to reduce the amount of Internet bandwidth that they use. Because the cache is shared by a large number of users, there are a large number of *shared hits* (objects that are requested by a number of client computers). Hit rates of 50% efficiency or greater are not uncommon. Proxy caches are a type of *shared cache*, unlike browser caches which are available to the user of the particular client computer.

Programmers insert data, or "tags" into their documents to control the freshness of particular documents. Hypertext Markup Language (HTML) tags and Hypertext Transfer Protocol (HTTP) headers are two methods used to control whether the client computer fetches a particular web page from a cache or from the web server.

HTML authors can put tags in a document's <HEAD> section that describe its attributes. These *Meta tags* are often used to mark a document as uncacheable, or expire it at a certain time. Authors may wish to mark a document as uncacheable because it contains dynamic data. For example, a document that contains stock quotes may be deemed dynamic and uncacheable because the stock quotes vary throughout the day.

Meta tags are usually only honored by browser caches (which actually read the HTML), not proxy caches (which almost never read the HTML in the document). Therefore, a no-cache meta tag placed on a document will not necessarily cause it to be kept fresh, if it goes through a shared, or proxy, cache.

True *HTTP headers* provide control over how both browser caches and proxies handle documents. They are usually automatically generated by the Web server. HTTP headers are sent by the server before the HTML, and only seen by the browser and any intermediate caches. Typical HTTP 1.1 response headers might look like this:

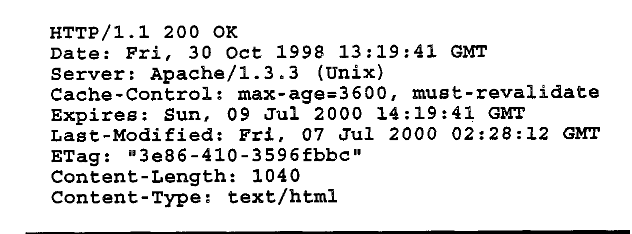

The HTML document would follow these headers, separated by a blank line.

The Expires HTTP header is the basic means of controlling caches in the prior art. The Expires HTTP header informs all caches of the freshness period of a document; after that time, caches will check back with the origin server to see if a document is changed.

Most Web servers allow you to set Expires response headers in a number of ways. Commonly, they will allow setting an absolute time to expire, a time based on the last time that the client saw the object (last *access time),* or a time based on the last time the document changed on your server (last *modification time*).

Expires headers are especially good for making static pages cacheable. Because static pages do not change often, long expiration times can be set. Cached documents make a web site appear more responsive since less data needs to be fetched from the origin server. Caching expiration headers are also useful in caching documents that are regularly changed. For instance, if a stock news page is updated once a day at 6am, the document can be set to expire at that time, so caches will know when to get a fresh copy, without users having to hit 'reload' from their browsers.

A challenge with the current web caching methods described above is that entire documents are marked as cacheable or uncacheable. Often times, only portions of a given document are dynamic and, therefore, uncacheable. For example, in a stock page listing the stock prices of the Dow Jones 30 Industrials, the names of the 30 stocks remains the same, only the stock prices change on a frequent basis. When any of the data in a document is dynamic, the document author typically marks the entire document as uncacheable, even if only a small percentage of the document is dynamic.

A further challenge is that expiration periods set to control the freshness of a document also apply to the entire document, rather than portions of the document. For example, if a document included the Dow Jones 30 Industrial stock prices and current news related to the companies that comprise the Dow Industrials, the stock prices may be deemed to expire after only a few minutes (or even after a period of seconds in real-time stock service sites). On the other hand, the news pertaining to the corresponding companies may be deemed fresh for a much longer period, perhaps several hours or even days. The prior art, however, sets a freshness limit on the entire document, rather than portions of the document.

What is needed, therefore, is a method for marking portions of documents as dynamic. In addition, what is needed is a method for setting an expiration period on portions of documents rather than entire documents.

### DISCLOSURE OF THE INVENTION

It has been discovered that providing document portion tags enables portions of a document to be treated as static with a copy stored in a cache for a longer period of time and other portions of the document to be treated as dynamic with more frequent fetches from the origin, or web, server.

Additional document portion tags allow the document creator to fine tune the freshness period for portions of documents so that some portions are refreshed from the web server more frequently than others. Documents that would traditionally be deemed dynamic, and therefore uncacheable, now include larger static portions that can be cached by either the proxy server or the client computer system. Placing expiration tags on various dynamic portions allows some portions to be treated as more dynamic than other portions, and thereby increases the refresh frequency of such dynamic portions.

Web servers utilizing the document portion tags have increased efficiency and throughput. First, static document areas of documents are sent to client computers less frequently since the client can fetch static portions from the client's browser cache or from the proxy server cache. Second, dynamic document portions are smaller in size than traditional dynamic documents so less data is gathered and sent by the web server to the client computers during a refresh of dynamic data. And third, less dynamic portions, such as stock news articles, are sent less frequently than more dynamic portions, such as stock prices. Web servers thereby need to send less data than in the prior art and, therefore, seem more responsive and can provide content to more users simultaneously.

Accordingly, the present invention provides a method for providing an electronic document comprising static and dynamic portions on a first computer, said method comprising: retrieving the static portion of the electronic document from a cache accessible by said first computer; determining whether the static portion is stale; replacing the static portion in response to determining that the static portion is stale with a fresh static portion obtained from a second computer; and retrieving one or more dynamic portions of the electronic document from said second computer to complete said electronic document.

According to a second aspect, the invention provides an information handling system comprising a first computer having a processor; and a storage device accessible by the processor including: a cache configured within the storage device, the storage device being capable of storing an electronic document including one or more dynamic document portions, a dynamic content tag being associated with each of the dynamic document portions, and one or more static document portions; the system further comprising: means for storing the static document portions to the cache; means for determining whether the stored static document portions are stale; means for retrieving updated static document portions from a second computer in response to determining that the stored static document portions are stale; and means for retrieving the stored static document portions from the cache in response to determining that the stored static document portions are not stale.

According to a third aspect, the invention also provides an electronic document sent from a first computer to a second computer, said electronic document comprising: a dynamic portion of the electronic document; identified by one or more dynamic content tags; and one or more static portions; wherein the electronic document is displayable by a software program executed on the second computer.

### BRIEF DESCRIPTION OF THE DRAWINGS

The present invention will now be described, by way of example only, with reference to the accompanying drawings, in which:
**Figure 1** is a block diagram of a server computer providing static and dynamic information to a client computer over a computer network;
**Figure 2** is a sample web page document with static and dynamic portions;
**Figure 3** shows sample HTML code designating a portion of a document as being dynamic;
**Figure 4** is a block diagram showing document content being pushed and requested to a pervasive computing device and stored in a cache area;
**Figure 5** is a block diagram showing document content being pushed and requested to a pervasive computing device and stored in two cache areas depending whether the data is static or dynamic;
**Figure 6** is a flowchart showing data being retrieved from a cache and portions being requested from a server based on the age of the document portions in the cache; and
**Figure 7** is a block diagram of an information handling system capable of implementing the present invention.

### DETAILED DESCRIPTION OF THE INVENTION

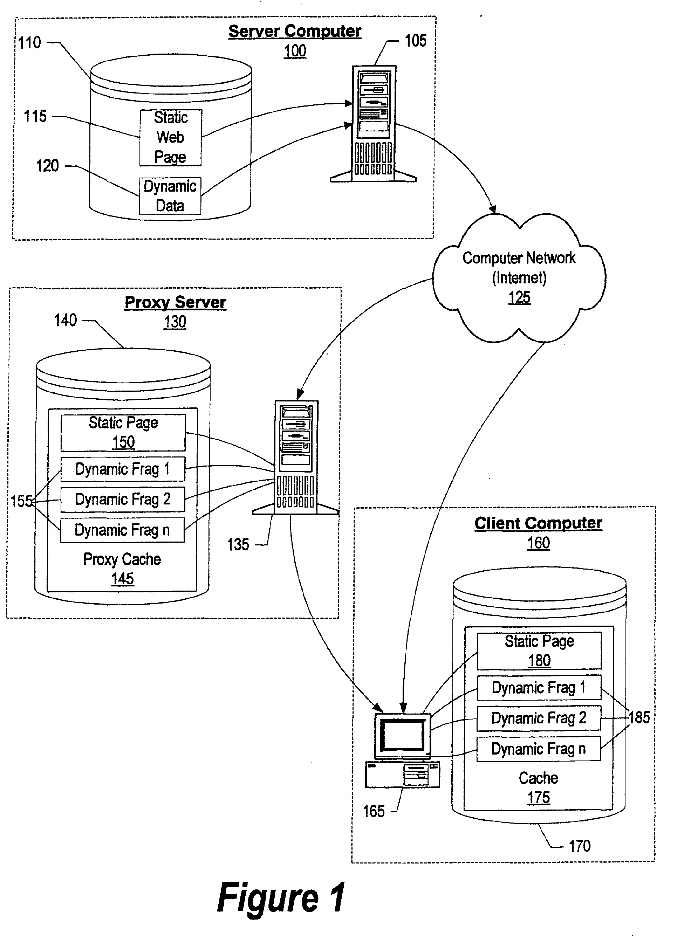

Figure 1 shows server computer system 100 providing data to proxy server system 130 and client computer system 160. Server computer system 100 includes nonvolatile storage device 110 accessible by server computer 105. Nonvolatile storage device 110 stores data that is served to client computers upon request. Static web page data 115 and dynamic data 120 are shown stored on nonvolatile storage device 110. Server computer system 110 connects to computer network 125 in order to provide data to client computers. Computer network 125 may be any network that attaches computer systems to one another, including the Internet.

Client computer system 160 is shown requesting data from server computer system 100 through proxy server computer system 130 and is also shown requesting data from server computer system 100 without the use of a proxy system. Proxy server computer system 130 includes proxy server computer 135 that stores data onto nonvolatile storage device 140. Proxy server computer system 130 serves multiple client computer systems. Client computers request information from server computer system 100 and other servers connected to computer network 125. These requests pass through proxy server computer system 130 before reaching computer network 125. The data returned from the servers also passes through proxy server computer system 130 before being returned to the requesting client, such as client computer system 160. Many clients may request the same information, such as the day's news stories and popular electronic commerce shopping sites. To expedite the delivery of common pages returned from servers, proxy server computer system 130 caches returned documents in proxy cache 145. In this way, a client may receive a requested document from proxy server computer system 130 rather than from the original server connected to the computer network. A dynamic document is divided into static portion 150 and dynamic portions 155. Static portion 150 has a longer expiration header than dynamic portions 155. When a client requests the dynamic document, proxy server computer system 130 checks proxy cache 145 and determines whether static portion 150 is stale by checking its expiration header or by implementing another freshness mechanism. Other freshness mechanisms include retrieving a new copy of a document from the original server (such as server computer system 100) after the document has been stored in proxy cache 145 for a predetermined amount of time. If static portion 150 is determined to be stale, a new copy of the static portion (or the entire document) is requested and received from the original server. On the other hand, if static portion 150 is determined not to be stale, static portion 150 is read from proxy cache 145 and returned to the requesting client. The document includes special tags that identify portions of the document as being dynamic. These dynamic portions are stored in proxy cache 145 as dynamic portions 155. As the name implies, dynamic portions 155 become stale before static portion 150. Some dynamic portions become stale so quickly, such as stock quotes, because the original servers update the data almost continuously. Dynamic portions that include real-time information are not cached so that fresh information is always retrieved from the original server. Other dynamic portions have shorter life spans than static portions but are still cacheable on a short term basis. For example, news related to a company may be refreshed every 15 minutes, every hour, or on some other frequency depending on the content provider. Special tags are used to identify such dynamic content as being dynamic and expiring after a given time period. When dynamic portions 155 are determined to be stale, only updated dynamic data is needed from the original server without needing to retrieve the entire document.

Client computer system 160 includes computer system 165 and nonvolatile storage device 170. Computer system 165 includes a display for viewing the returned pages using web browser software such as Netscape Navigator™ or Microsoft Internet Explorer™. Cache 175 is stored on nonvolatile storage device 170. Cache 175 is used for storing static portion 180 and dynamic portions 185 of documents. Unlike proxy cache 145, cache 175 is only accessible by client computer system 165. Items are placed in cache 175 and read from cache 175 by the web browser software. When the user navigates to a web page that has already been retrieved from an original server, the browser software determines if the data is stale. If the data is stale, updated data (either static portion 180 or dynamic portions 185) are retrieved from the original server (such as server computer system 100). On the other hand, if the data is not stale, it is fetched from cache 175. Again, by identifying dynamic portions 185 by using special tags in the document, the amount of data needed to be retrieved to keep a document fresh is kept to a minimum. By only fetching dynamic portions, which may be a small percentage of an overall document, client computer system 160 retrieves updated documents from original servers faster than having to request entire documents.

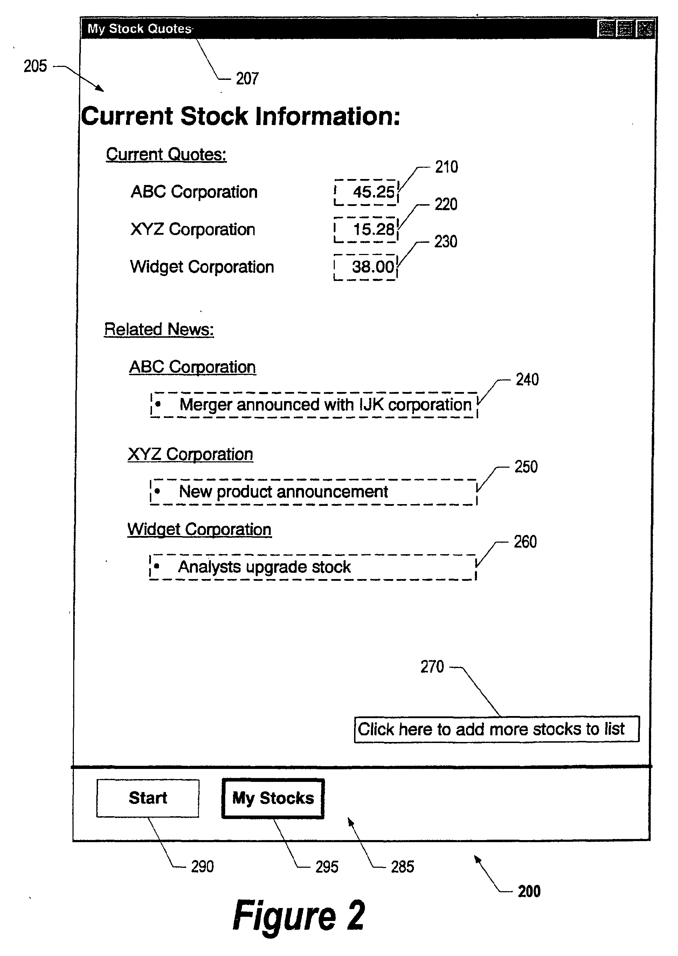

Figure 2 shows display screen 200 that includes web page 205 and taskbar area 285. Title bar 207 shows that web page 205 being displayed is titled "My Stock Quotes." Web page 205 is an example of a page that can be edited by a user to show only those stocks of interest to the user. Web page 205 is a form of an electronic document that includes both dynamic and static data. Web page 205 includes two sets of dynamic data: current stock quotes, which become stale quite quickly, and related news, which become stale at a slower rate. Web page 205 also includes static data, such as the names of the companies, and titles displayed on the page. The dynamic data is shown with a dashed outline. The dashed outline illustrates the dynamic portions of web page 205, but would not actually be displayed to the user. Dynamic data includes dynamic quotes 210, 220, and 230. During a trading day, this data would become stale extremely fast and would need to be retrieved from the originating server, rather than from a cache area, frequently. Dynamic data also includes company information hyperlinks 240, 250, and 260. These hyperlinks would be added and removed from web page 205 as further news corresponding with the stocks changed. Because the stock quotes change more frequently than news reports, the news reports could be retrieved from the cache until the news became stale. For example, company information hyperlinks 240, 250, and 260 could continue to be retrieved from the cache until a time period, such as every 15 minutes, occurred. When the time period elapses, fresh hyperlinks would be retrieved from the original server. If the user wishes to edit the stocks page, for example to add or delete stocks that appear on the page, command button 270 is pressed leading to an edit function. Taskbar 285 is used to switch between active tasks running on the computer. The browser session is included in the taskbar as My Stocks command button 295. Start button 290 is used to invoke other applications.

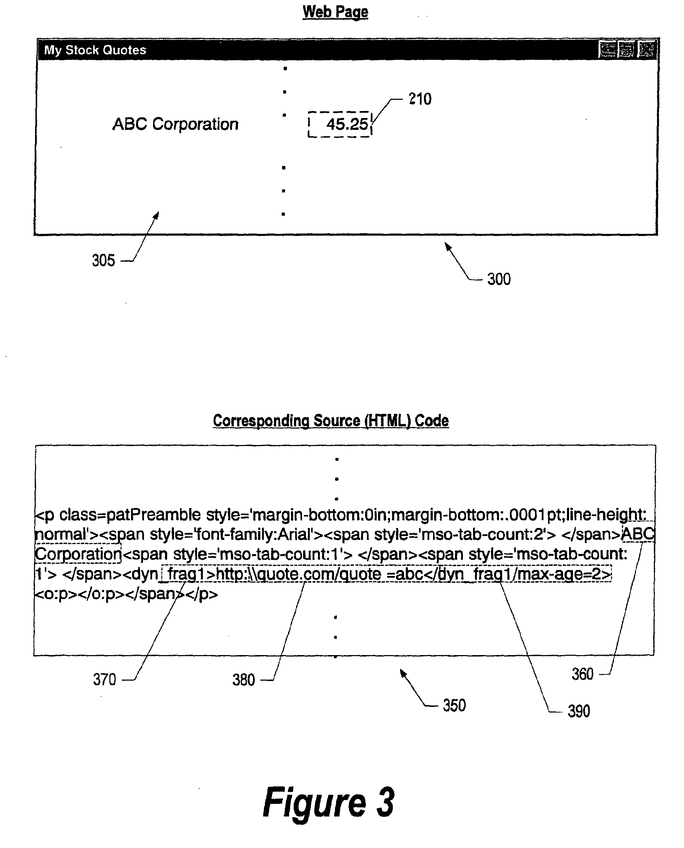

Figure 3 shows display screen 300 which is a portion of display screen 200 (see Figure 2). Figure 3 also shows source code window 350. Source code window 350 shows a relevant portion of source code corresponding to web page 305. Web page 305 shows the "ABC Corporation" (static data) and corresponding stock quote 210 (dynamic data). Source code window 350 shows the HTML (Hypertext Markup Language) source code used to generate the display data shown in web page 305. Static code 360 is used to generate the "ABC Corporation" static text. Dynamic stock quote 210 is coded by using begin dynamic tag 370, dynamic code 380, and end dynamic tag 390. Begin dynamic tag 370 is shown as "<dyn_frag1>" This special tag indicates to the browser that the data that follows begin dynamic tag 370 is dynamic and should be treated accordingly. Dynamic code 380 is shown as "http\\quote.com/quote=abc." Dynamic code 380 is the network location of the dynamic portion. To refresh stock quote 210, the browser would request quote=abc from the quote.com web server. Quote.com would respond by providing the stock quote without providing the entire web page. End dynamic tag 390 is shown as "</dyn_frag1/max-age=2>" which indicates the end of the dynamic data portion named "dyn_fragl" and also sets the maximum cacheable limit to be 2 minutes ("max-age=2"). If the user navigates back to web page 305, for example by using the "back" button on a browser, the browser will check to see if stock quote 210 is older than two minutes old. If the stock quote stored in the cache is less than two minutes old, the cache value is used. On the other hand, if the value is greater than two minutes old, a new stock quote is retrieved from the server. The dynamic news hyperlinks 240, 250, and 260 (see Figure 2) would be implemented using longer time limits in the corresponding end dynamic tags.

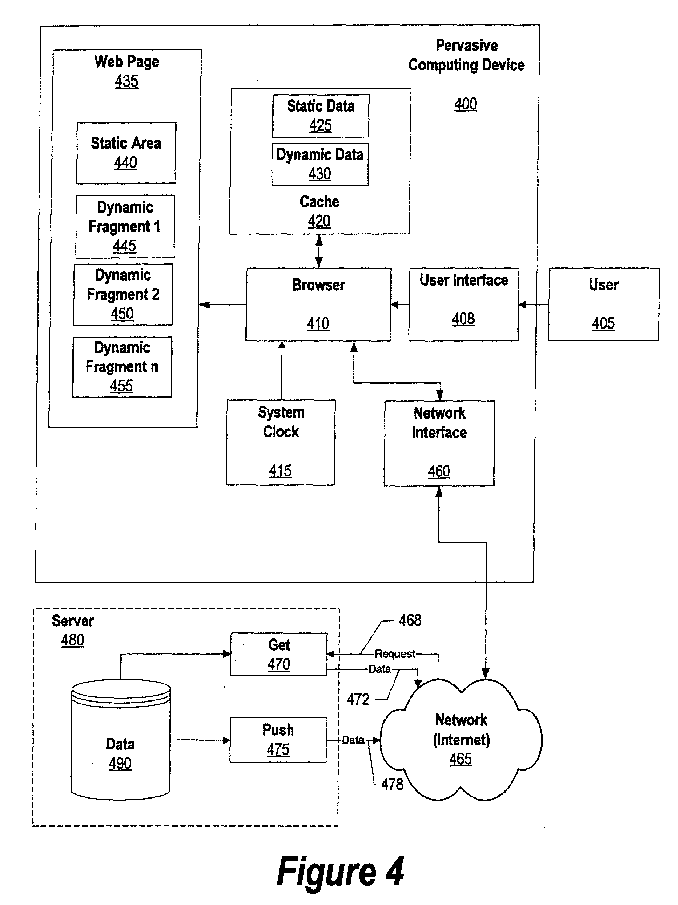

Figure 4 shows a block diagram of pervasive computing device retrieving static and dynamic data from server 480. Server 480 includes nonvolatile storage device 490 that stores data to be served to clients upon request. Pervasive computing device 400 issues request 468 to get a particular data item from nonvolatile storage device 490. Get procedure 470 retrieves the requested data and sends data packet 472 back to pervasive computing device 400 via computer network 465. A common example of computer network 465 is the Internet. In another example, server 480 is programmed to push data to pervasive computing device 400 at various times. When the time arrives, push process 475 operates to send data packet 478 to pervasive computing device 400 via computer network 465. An example of using push process 475 is to provide pervasive computing device 400 with a continuously updated stock ticker bar that is displayed in a window on the device's display screen.

The data packets are retrieved by network interface 460 and in turn provided to browser 410. Browser 410 receives commands from user 405 using user interface 408. User interface 408 often includes using a pointing device, such as a mouse, and a keyboard to interface with browser 410. Browser 410 also accesses system clock 415 to determine whether data stored in cache 420 is stale. Browser 410 displays web page 435 on the display attached to pervasive computing device 400. Web page 435 includes static portion 440 and dynamic portions 445, 450, and 455. Cache 420 also includes static data 425 and dynamic data 430. When user 405 navigates to a particular web page using user interface 408, browser 410 checks to see if the requested web page is cached. If the web page is cached, browser 410 checks the expiration data included in the tags associated with static data 425 and dynamic data 430 and compares the expiration data with the current time from system clock 415. If the data is stale, an updated copy is requested from server 480. On the other hand, if the data is not stale, the copy of the web page located in cache 420 is used. Because dynamic data is segregated from static data, there is a greater likelihood that only dynamic data will need to be retrieved from server 480, thus reducing the size of data packet 472 returned to pervasive computing device 400. Smaller data packets are handled more expeditiously and efficiently by both server 480 and pervasive computing device 400 so less time is taken to display web page 435.

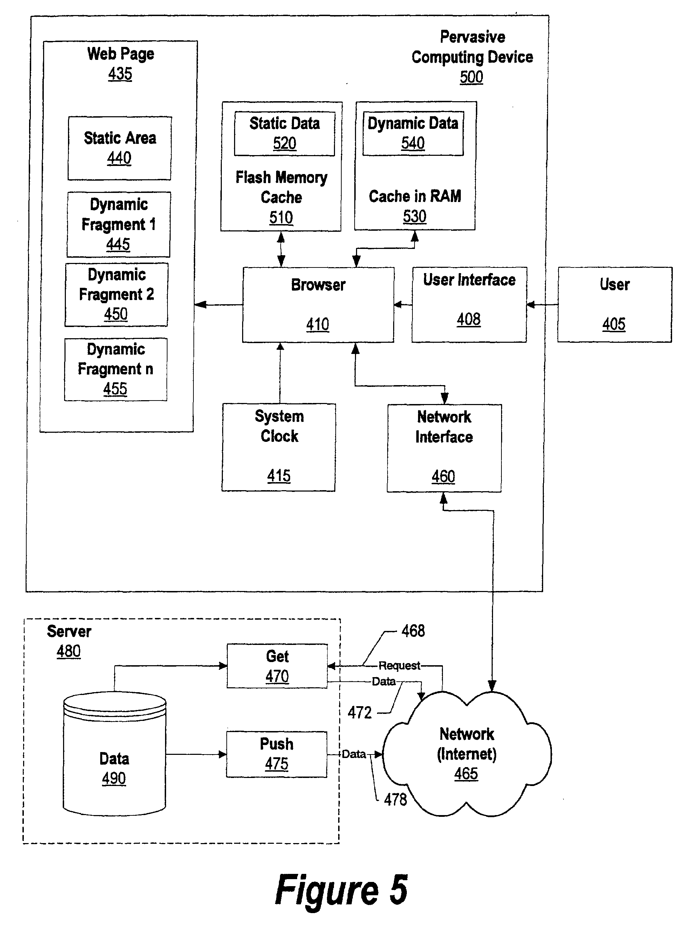

Figure 5 shows pervasive computing device 500 that is similar to pervasive computing device 400 shown in figure 4. Pervasive computing device 500, however, is shown with two caches: nonvolatile storage cache 510 for storing static data 520, and RAM cache 530 for storing dynamic data 540. In a constrained device, limited nonvolatile storage space may be available, such as flash memory. In addition, constrained pervasive computing devices may operate more slowly than desktop computers so that storing data to RAM is significantly faster than storing the data to the nonvolatile storage area. Nonvolatile storage area 510 is used to store static data so that if pervasive computing device 500 is shut off and restarted, the static cache is still intact. Dynamic data 540 would most likely be stale anyway before pervasive computing device is shut down and restarted. Therefore, saving dynamic data 540 in random access memory cache 530 would cause little performance degradation.

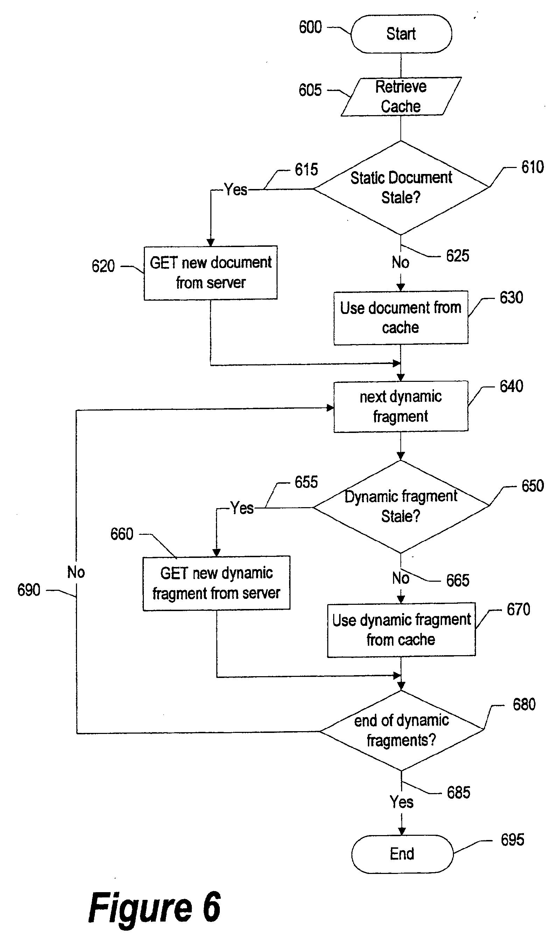

Figure 6 shows a flowchart for processing static and dynamic data stored in a cache. When the user navigates to a web page, processing starts at 600 whereupon the requested web page is retrieved from cache (input 605). If the retrieved web page is stale or does not exist in the cache, decision 610 branches to "yes" branch 615 and a new copy of the document is retrieved from the web server (step 620). If the electronic document (web page) exists in the cache, decision 610 branches to "no" branch 625 and the cached document is used (step 630). The dynamic portions of the document are checked to determined whether they are stale. The next (first) dynamic portion is retrieved from the cache (step 640) and a determination is made as to whether the dynamic portion is stale (decision 650). If the dynamic portion is stale, "yes" branch 655 is taken and the dynamic portion is retrieved from the server (step 660). On the other hand, if the dynamic portion is not yet stale, decision 650 branches to "no" branch 665 and the dynamic portion from the cache is used (step 670). If the dynamic portion that was just processed is the last dynamic portion, decision 680 branches to "yes" branch 685 whereupon processing terminates at terminator 695. On the other hand, if more dynamic portions exist in the web page being retrieved, "no" branch **690** is taken looping back to process the next dynamic portion.

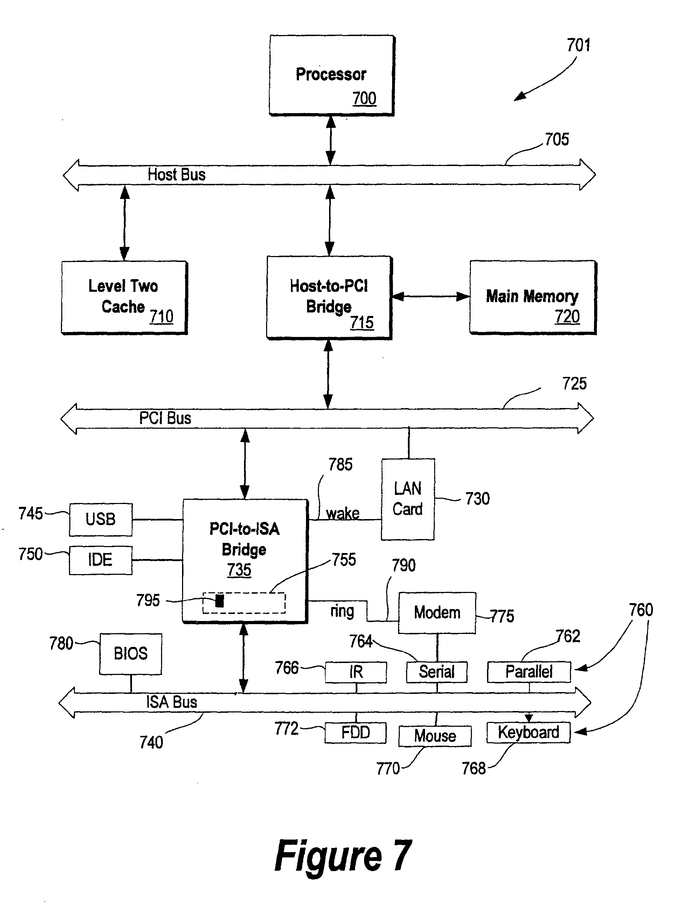

**Figure 7** illustrates information handling system **701** which is a simplified example of a computer system capable of performing the present invention. Computer system **701** includes processor **700** which is coupled to host bus **705.** A level two (L2) cache memory **710** is also coupled to the host bus **705.** Host-to-PCI bridge **715** is coupled to main memory **720,** includes cache memory and main memory control functions, and provides bus control to handle transfers among PCI bus **725**, processor **700,** L2 cache **710,** main memory **720**, and host bus **705.** PCI bus **725** provides an interface for a variety of devices including, for example, LAN card **730.** PCI-to-ISA bridge **735** provides bus control to handle transfers between PCI bus **725** and ISA bus **740,** universal serial bus (USB) functionality **745,** IDE device functionality **750,** power management functionality **755**, and can include other functional elements not shown, such as a real-time clock (RTC), DMA control, interrupt support, and system management bus support. Peripheral devices and input/output (I/O) devices can be attached to various interfaces **760** (e.g., parallel interface **762,** serial interface **764,** infrared (IR) interface **766,** keyboard interface **768,** mouse interface **770,** and fixed disk (FDD) **772**) coupled to ISA bus **740.** Alternatively, many I/O devices can be accommodated by a super I/O controller (not shown) attached to ISA bus **740.**

BIOS **780** is coupled to ISA bus **740,** and incorporates the necessary processor executable code for a variety of low-level system functions and system boot functions. BIOS **780** can be stored in any computer readable medium, including magnetic storage media, optical storage media, flash memory, random access memory, read only memory, and communications media conveying signals encoding the instructions (e.g., signals from a network). In order to attach computer system **701** another computer system to copy files over a network, LAN card **730** is coupled to PCI-to-ISA bridge **735.** Similarly, to connect computer system **701** to an ISP to connect to the Internet using a telephone line connection, modem **775** is connected to serial port **764** and PCI-to-ISA Bridge **735.**

While the computer system described in **Figure 7** is capable of executing the copying processes described herein, this computer system is simply one example of a computer system. Those skilled in the art will appreciate that many other computer system designs are capable of performing the copying process described herein.

One of the preferred implementations of the invention is an application, namely, a set of instructions (program code) in a code module which may, for example, be resident in the random access memory of the computer. Until required by the computer, the set of instructions may be stored in another computer memory, for example, in a hard disk drive, or in a removable memory such as an optical disk (for eventual use in a CD ROM) or floppy disk (for eventual use in a floppy disk drive), or downloaded via the Internet or other computer network. Thus, the present invention may be implemented as a computer program product for use in a computer. In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

## Claims

1. An electronic document (205) sent from a first computer (100) to a second computer, said electronic document comprising:
a dynamic portion (210) of the electronic document identified by one or more dynamic content tags (370, 390); and
one or more static portions (360);
wherein the electronic document is displayable by a software program executed on the second computer.

2. An electronic document as claimed in claim 1, further comprising:
a freshness tag associated with one or more of the dynamic content tags, the freshness tag indicating a freshness period for the associated dynamic content tags.

3. An electronic document as claimed in claim 1 or claim 2, further comprising:
a freshness tag associated with one or more static content tags, each of the static content tags being associated with a static portion;
wherein the freshness tag indicates a freshness period for the associated static portion.

4. A method for providing an electronic document comprising static and dynamic portions on a first computer, said method comprising:
retrieving (605) the static portion of the electronic document from a cache accessible by said first computer;
determining (610) whether the static portion is stale;
replacing (620) the static portion in response to determining that the static portion is stale with a fresh static portion obtained from a second computer; and
retrieving one or more dynamic portions of the electronic document from said second computer to complete said electronic document.

5. The method as claimed in claim 4, further comprising:
retrieving the dynamic portions from a cache assessible by said first computer;
determining whether the dynamic portions are stale; and
replacing the dynamic portions in response to determining that the dynamic portions are stale with fresh dynamic portions obtained from said second computer.

6. The method as claimed in claim 4 or claim 5 further comprising:
identifying the dynamic portions by reading a dynamic content tag.

7. A computer progam comprising instructions which, when executed on a computer, cause the computer to carry out the steps of a method as claimed in any one of claims 4 to 6.

8. An information handling system comprising a first computer (160) having a processor; and
a storage device (170) accessible by the processor including:
a cache (175) configured within the storage device, the storage device being capable of storing an electronic document (205) including one or more dynamic document portions (210), a dynamic content tag (370, 390) being associated with each of the dynamic document portions, and one or more static document portions (360); the system further comprising:
means (410) for storing the static document portions to the cache;
means (610, 650) for determining whether the stored static document portions are stale;
means (470, 620) for retrieving updated static document portions from a second computer in response to determining that the stored static document portions are stale; and
means (630) for retrieving the stored static document portions from the cache in response to determining that the stored static document portions are not stale.

9. An information handling system as claimed in claim 8 wherein the cache is configured in a nonvolatile storage device, the information handling system further comprising:
a second cache configured in memory; and
means for storing the dynamic document portions in the second cache.

10. An information handling system as claimed in claim 8, further comprising:
means for storing the dynamic document portions in the cache.

11. An information handling system as claimed in either claim 9 or claim 10, further comprising:
means for determining whether the stored dynamic document portions are stale;
means for sending updated dynamic document portions from the second computer to the information handling system in response to a determination that the stored dynamic document portions are stale; and
means for replacing the dynamic document portions with the updated dynamic document portions.

12. An information handling system as claimed in any one of claims 8 to 11, wherein the first computer is a client computer hosing a web browser adapted to receive documents as web pages over the Internet from said second computer, acting as a web page server.

13. An information handling system as claimed in any one of claims 8 to 11 wherein the first computer is a proxy server adapted to receive documents as web pages over the Internet from said second computer, acting as a web page server.
